# EUROPÄISCHE PATENTANMELDUNG

(11) **EP 2 199 768 A2**
(43) Veröffentlichungstag der Anmeldung: **23.06.2010**
(21) Anmeldenummer: 09179313.3
(22) Anmeldetag: 15.12.2009
(51) Int. Cl.: G01K 1/08, G01K 1/16

(54) **Verfahren zur Herstellung eines Temperatursensors**

(30) Priorität: 16.12.2008 DE 102008062551
(71) Anmelder: Continental Automotive GmbH, 30165 Hannover (DE)
(72) Erfinder: Kovar, Antonin, 75655, Dolni Becva (CZ); Krsjak, Andrej, 02001, Puchov (SK); Slavik, Rostislav, 74221, Koprivnice (CZ); Yahia, Maymoon, 76824, Hulin (CZ)

(57) **Zusammenfassung**

Die Erfindung betrifft Verfahren zur Herstellung eines Temperatursensors. Um ein Verfahren zur Herstellung eines Temperatursensors anzugeben, bei dem kostengünstig und aufwandsarm eine gute thermische Verbindung zwischen dem Sensorelement und dem zu messenden Medium hergestellt wird, werden die folgenden Verfahrensschritte ausgeführt:
- Einlegen eines auf einem Basiselement (7) montierten Temperatursensorelementes (1) in ein Formgebungswerkzeug (5),
- Einfüllen eines mineralischen Pulvers (3) in das Formgebungswerkzeug (5),
- Formgebung des mineralischen Pulvers (3) durch Verpressen des mineralischen Pulvers (3) mit einem Stempel (4), wobei das mineralische Pulver (3) verfestigt wird,
- Entfernen des Temperatursensorelementes (1) mit dem verfestigten mineralischen Pulver (3) aus dem Formgebungswerkzeug (5),
- Aufsetzen einer Schutzkappe (8) auf das verfestigten mineralische Pulver (3),
- erneute Formgebung des mineralischen Pulvers (3) durch Anpressen der Schutzkappe (8) an das mineralische Pulver (3),
- Verbinden des Basiselementes (7) mit der Schutzkappe (8).

## Beschreibung

Die Erfindung betrifft Verfahren zur Herstellung eines Temperatursensors

Für Temperatursensoren gibt es eine Vielzahl technischer Anwendungen, zum Beispiel im Automobilbau, der Kraftwerkstechnik, der Heiztechnik oder der Gebäudetechnik. Dabei müssen die Temperatursensoren Temperaturen weit unter dem Gefrierpunkt genauso erfassen, wie hohe Temperaturen von über 1000 °C.

Als Sensorelemente werden in der Regel elektronische Sensorelemente, wie zum Beispiel NTC's oder PTC's eingesetzt. Diese elektronischen Sensorelemente sind relativ empfindlich gegenüber äußeren Einflüssen, wie zum Beispiel chemisch-reaktive Gase oder mechanische Anstöße. Daher werden die Temperatursensorelemente in der Regel verkapselt und somit vor den äußeren Einflüssen geschützt. Die Verkapselung bewirkt jedoch einen verzögerten Übergang der zu messenden Temperatur auf das Sensorelement. Daher ist es üblich, den Raum zwischen dem elektronischen Sensorelement und beispielsweise einer darüber angeordneten Schutzkappe mit einem thermisch gut leitenden Material auszufüllen. Hierzu werden häufig keramische Pulver verwendet, die in die Schutzkappe eingefüllt werden und eine pulverförmige thermisch gut leitende Zwischenschicht bilden. Das Einfüllen solcher Pulver in die Schutzkappe eines Temperatursensors erweist sich regelmäßig als relativ schwieriger Prozess, bei dem es zu gasförmigen Einschlüssen kommen kann, die einer guten thermischen Leitung entgegenwirken.

Aufgabe der vorliegenden Erfindung ist es daher, ein Verfahren zur Herstellung eines Temperatursensors anzugeben, bei dem kostengünstig und aufwandsarm eine gute thermische Verbindung zwischen dem Sensorelement und dem zu messenden Medium hergestellt wird.

Die Aufgabe wird erfindungsgemäß durch ein Verfahren mit den Merkmalen des Anspruchs 1 gelöst.

Durch das Verfahren zur Herstellung eines Temperatursensors mit folgenden Verfahrensschritten:
- Einlegen eines auf einem Basiselement montierten Temperatursensorelementes in ein Formgebungswerkzeug,
- Einfüllen eines mineralischen Pulvers in das Formgebungswerkzeug,
- Formgebung des mineralischen Pulvers durch Verpressen des mineralischen Pulvers mit einem Stempel, wobei das mineralische Pulver verfestigt wird,
- Entfernen des Temperatursensorelementes mit dem verfestigten mineralischen Pulver aus dem Formgebungswerkzeug,
- Aufsetzen einer Schutzkappe auf das verfestigten mineralische Pulver,
- erneute Formgebung des mineralischen Pulvers durch Anpressen der Schutzkappe an das mineralische Pulver,
- Verbinden des Basiselementes mit der Schutzkappe
wird auf einfache und kostengünstige Weise ein Temperatursensor geschaffen, der schnell und zuverlässig auf die Änderungen der zu messenden Temperatur anspricht und der dennoch einen hervorragenden Schutz des elektronischen Temperatursensorelementes bietet. Das Verfestigen des mineralischen Pulvers mit dem Formgebungswerkzeug ermöglicht zum einen den Ausschluss von Gaseinschlüssen im mineralischen Pulver und erleichtert zum anderen das Aufsetzen der Schutzkappen. Durch das erneute Anpressen der Schutzkappe gegen das mineralische Pulver werden auch eventuell noch vorhandene Freiräume zwischen dem mineralischen Pulver und der Schutzkappe entfernt. Das Verbinden des Basiselementes mit der Schutzkappe verhindert effektiv das Eindringen von chemisch aktiven Substanzen, wie Wasser oder Abgas, in den Temperatursensor. Dazu kann das Verbinden des Basiselements mit der Schutzkappe vorteilhaft durch verschweißen, verkleben, verstemmen oder verschrauben erfolgen.

Bei einer Weiterbildung wird der Formkörper aus dem mineralischen Pulver, nach der Formgebung des mineralischen Pulvers durch Verpressen des mineralischen Pulvers mit einem Stempel, gesintert. Dies hat den Vorteil, dass der gesinterte Körper aus dem mineralischen Pulver völlig eigenstabil ist und problemlos mit der Schutzkappe überzogen werden kann.

Es ist auch denkbar auf den gesinterten Körper aus dem mineralischen Pulver eine Schutzkappe durch versprühen oder verdampfen eines entsprechenden Materials zu erzeugen. Dabei kann zum Beispiel ein temperaturbeständiger Lack oder Kunststoff auf den gesinterten Körper aus dem mineralischen Pulver aufgesprüht werden oder ein Metall kann auf diesen Körper aufgedampft werden. Das versprühte oder verdampfte Material sollte dabei vorteilhafter Weise den gesinterten Körper aus dem mineralischen Pulver und teilweise das Basiselement überdecken.

Bei einer Weiterbildung erfolgt das Anpressen der Schutzkappe an das mineralische Pulver mit einem höheren Druck als das Verpressen des mineralischen Pulvers mit dem Stempel. Hierdurch können auch beim Anpressen der Schutzkappe an das mineralische Pulver noch eventuell vorhandene Gaseinschlüsse beseitigt werden und das mineralische Pulver kann vollständig der Form der Schutzkappe angepasst werden, wobei jegliche Materialtolleranzen automatisch ausgeglichen werden

Weitere Merkmale, Vorteile und Weiterbildungen ergeben sich aus dem nachfolgend in Verbindung mit den Figuren erläuterten Beispiel. Es zeigen:
- Figur 1: das Temperaturmesselement auf dem Basiselement,
- Figur 2: die Formgebung des mineralischen Pulvers durch Verpressen des mineralischen Pulvers mit einem Stempel,
- Figur 3: den Temperatursensor nach der Entfernung aus dem Formgebungswerkzeug,
- Figur 4: den nach dem erfindungsgemäßen Verfahren hergestellten Temperatursensor.

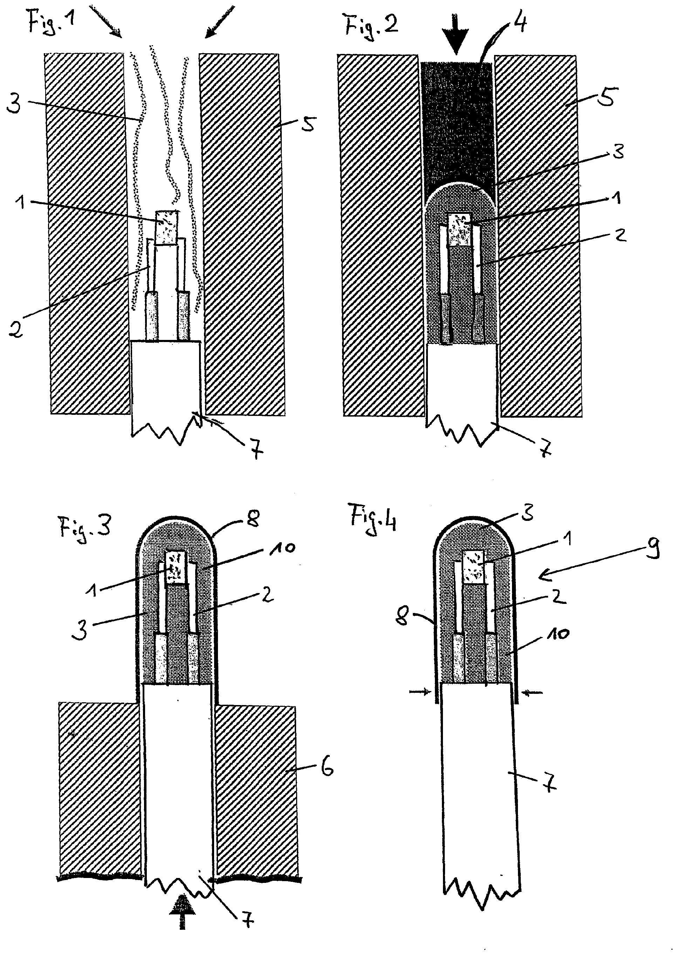

Figur 1 zeigt ein Temperatursensorelement 1, das auf einem Basiselement 7 angeordnet ist. Das Temperatursensorelement 1 ist mit Anschlussdrähten 2 verbunden, die durch das Basiselement 7 eine elektrische Verbindung zu nachfolgenden elektronischen Komponenten herstellen.

In Figur 1 wird das Temperaturmesselement 1 auf dem Basiselement 7 in einem Formgebungswerkzeug 5 angeordnet dargestellt. In das Formgebungswerkzeug 5 wird mineralisches Pulver 3 eingefüllt, solange, bis das Temperaturmesselement 1 vollständig vom mineralischen Pulver 3 bedeckt ist.

In einem nächsten in Figur 2 dargestellten Verfahrensschritt erfolgt die Formgebung des mineralischen Pulvers 3 durch Verpressen des mineralischen Pulvers 3 mit einem Stempel 4, wobei das mineralische Pulver 3 verfestigt wird. Mit dem Stempel 4 können dem mineralischen Pulver 3 alle gewünschten Formen aufgepresst werden. Eine mittlere Teilchengröße der Partikel im mineralischen Pulver beträgt beispielsweise zwischen 10 und 500 Nanometern, wodurch zwischen den einzelnen Partikeln des mineralischen Pulvers eine Gleitbewegung während des Verpressens besteht, durch die sich die Partikel des mineralischen Pulvers durch Platzwechsel untereinander enorm verdichten, wobei ein Presskörper entsteht, der seine Form auch nach der Entfernung des Stempels 4 und des Formgebungswerkzeuges 5 beibehält.

In Figur 3 ist der Temperatursensor nach der Entfernung aus dem Formgebungswerkzeug 5 dargestellt. Über den Körper aus verfestigtem mineralischem Pulver 3 ist nun eine Schutzkappe 8 gezogen. Diese Schutzkappe 8 kann zum Beispiel aus Metall bestehen. Die Verbindung der Schutzkappe 8 mit dem Basiselement 7 erfolgt zum Beispiel durch Verschweißen, Verkleben, Verstemmen oder Verschrauben. Dabei wird von der Schutzkappe 8 erneut Druck auf den schon verfestigten Körper aus mineralischem Pulver 3 ausgeübt, wobei es erneut zur Verschiebung der einzelnen Partikel des mineralischen Pulvers 3 kommt und somit der Formkörper perfekt an die Form der Schutzkappe 8 angepasst wird. Lufteinschlüsse zwischen dem Temperatursensorelement 1 und der Schutzkappe 8 sind damit vollständig ausgeschlossen, wodurch eine hervorragende thermische Verbindung zwischen dem Temperatursensorelement 1 und dem zu messenden Medium hergestellt wird. Beim Anpressen des verfestigten mineralischen Pulvers 3 an die Schutzkappe 8 wird das Basiselement 7 durch ein Haltewerkzeug 6 gehalten. Nachdem die Schutzkappe 8 auf das verfestigte mineralische Pulver 3 aufgepresst wurde, wird der Temperatursensor 9 aus dem Haltewerkzeug 6 entfernt und die Schutzkappe 8 wird mit dem Basiselement durch Verschweißen, Verkleben, Verstemmen oder Verschrauben verbunden, was durch die Pfeile in Figur 4 dargestellt ist.

Figur 4 zeigt den nach dem erfindungsgemäßen Verfahren hergestellten Temperatursensor 9. Neben dem Verpressen des mineralischen Pulvers 3 durch den Stempel 4 und darauffolgend durch die Schutzkappe 8 ist es auch möglich, den Formkörper aus mineralischem Pulver 3 zu sintern, wodurch eine weitere Verfestigung des Formkörpers 10 erreicht wird. Beim Sintern wird die mineralische Pulvermasse zunächst so vorgeformt, dass wenigstens ein minimaler Zusammenhalt der Pulverpartikel gegeben ist. Der so vorgepresste Grünling wird im Anschluss durch Wärmebehandlung unterhalb der Schmelztemperatur des mineralischen Pulvers verdichtet und ausgehärtet. Beim Sintervorgang verringert sich die Porosität und das Volumen des Grünlings deutlich, wodurch es notwendig ist, dass Sintern des Formkörpers 10 vorzunehmen, bevor die Schutzkappe 8 auf den Formkörper 10 aufgesetzt wird. Weil die exakte Berechnung des Volumenverlustes beim Sintern relativ schwierig ist, wird der fertige Formkörper nach dem Sintern unter hohem Druck in die Schutzkappe 8 gepresst. Damit ist sichergestellt, dass auch nach dem Sintern des Formkörpers 10 ein lufteinschlussfreier Bereich aus mineralischem Pulver zwischen dem Temperatursensorelement 1 und der Schutzkappe 8 entsteht.

Darüber hinaus ist es auch denkbar auf den gesinterten Formkörper 10 aus dem mineralischen Pulver eine Schutzkappe 8 durch versprühen oder verdampfen eines entsprechenden Materials zu erzeugen. Dabei kann zum Beispiel ein temperaturbeständiger Lack oder Kunststoff auf den gesinterten Formkörper 10 aus dem mineralischen Pulver aufgesprüht werden oder ein Metall kann auf diesen Körper aufgedampft werden. Das versprühte oder verdampfte Material sollte dabei vorteilhafter Weise den gesinterten Formkörper 10 aus dem mineralischen Pulver und zumindest teilweise das Basiselement 7 überdecken.

## Patentansprüche

1. Verfahren zur Herstellung eines Temperatursensors (9) mit folgenden Verfahrensschritten:
- Einlegen eines auf einem Basiselement (7) montierten Temperatursensorelementes (1) in ein Formgebungswerkzeug (5),
- Einfüllen eines mineralischen Pulvers (3) in das Formgebungswerkzeug (5),
- Formgebung des mineralischen Pulvers (3) durch Verpressen des mineralischen Pulvers (3) mit einem Stempel (4), wobei das mineralische Pulver (3) verfestigt wird,
- Entfernen des Temperatursensorelementes (1) mit dem verfestigten mineralischen Pulver (3) aus dem Formgebungswerkzeug (5),
- Aufsetzen einer Schutzkappe (8) auf das verfestigten mineralische Pulver (3),
- erneute Formgebung des mineralischen Pulvers (3) durch Anpressen der Schutzkappe (8) an das mineralische Pulver (3),
- Verbinden des Basiselementes (7) mit der Schutzkappe (8).

2. Verfahren zur Herstellung eines Temperatursensors (9) nach Anspruch 1, **dadurch gekennzeichnet, dass** das Verbinden des Basiselements (7) mit der Schutzkappe (8) durch verschweißen, verkleben, verstemmen oder verschrauben erfolgt.

3. Verfahren zur Herstellung eines Temperatursensors (9) nach Anspruch 1, **dadurch gekennzeichnet, dass** der Formkörper (10) aus dem mineralischen Pulver (3), nach der Formgebung des mineralischen Pulvers (3) durch Verpressen des mineralischen Pulvers (3) mit dem Stempel (4), gesintert wird.

4. Verfahren zur Herstellung eines Temperatursensors (9) nach Anspruch 3, **dadurch gekennzeichnet, dass** die Schutzkappe auf dem gesinterten Körper aus dem mineralischen Pulver durch versprühen oder verdampfen eines entsprechenden Materials zu erzeugt wird.

5. Verfahren zur Herstellung eines Temperatursensors (9) nach Anspruch 1, 2 oder 3, **dadurch gekennzeichnet, dass** das Anpressen der Schutzkappe (8) an das mineralische Pulver (3) mit einem höheren Druck erfolgt als das Verpressen des mineralischen Pulvers (3) mit dem Stempel (4).
